# EUROPEAN PATENT SPECIFICATION

(11) **EP 3 390 071 B1**
(45) Date of publication and mention of the grant of the patent: **24.06.2020**
(21) Application number: 16819687.1
(22) Date of filing: 16.12.2016
(51) Int. Cl.: B60C 1/00, C08L 9/06

(54) **A TIRE COMPRISING A TREAD**
REIFEN MIT EINER LAUFFLÄCHE
PNEUMATIQUE COMPRENANT UNE BANDE DE ROULEMENT

(30) Priority: 17.12.2015 WO PCT/JP2015/086153
(43) Date of publication of application: 24.10.2018
(73) Proprietor: Compagnie Générale des Etablissements Michelin, 63000 Clermont-Ferrand (FR)
(72) Inventor: DOTSON Michael Edward, Tokyo 163-1073 (JP); HARANO Aya, Tokyo 163-1073 (JP); SAKURADA Tomoya, Tokyo 163-1073 (JP)
(74) Representative: Regimbeau
(86) International application number: PCT/JP2016/087482
(87) International publication number: WO 2017/104780

(56) References cited:
- DATABASE WPI Week 199735 Thomson Scientific, London, GB; AN 1997-380857 XP002768126, & JP H09 164809 A (YOKOHAMA RUBBER CO LTD) 24 June 1997 (1997-06-24)
- DATABASE WPI Week 199725 Thomson Scientific, London, GB; AN 1997-276241 XP002768127, & JP H09 99712 A (BRIDGESTONE CORP) 15 April 1997 (1997-04-15)
- DATABASE WPI Week 200667 Thomson Scientific, London, GB; AN 2006-640679 XP002768128, & JP 2006 240583 A (BRIDGESTONE CORP) 14 September 2006 (2006-09-14)
- DATABASE WPI Week 201533 Thomson Scientific, London, GB; AN 2015-287271 XP002768129, & JP 2015 085864 A (YOKOHAMA RUBBER CO LTD) 7 May 2015 (2015-05-07)
- J. JANCA ET AL: "A plasma surface treatment of polyester textile fabrics used for reinforcement of car tires", PLASMAS AND POLYMERS., vol. 6, no. 1/2, 1 January 2001 (2001-01-01), pages 15-26, XP055353990, US ISSN: 1084-0184, DOI: 10.1023/A:1011361205592

## Description

### [Technical Field]

This invention relates to tires having treads suitable for "winter tires" (also known as studless tires) without being provided with studs capable of rolling over ground surfaces covered with ice or black ice.

It relates more particularly to treads for winter tires specifically suited to rolling under "melting ice" conditions encountered within a temperature range typically of between -5°C and 0°C.

### [Background Art]

The problem in general: Within such a range, the pressure of the tires during the passage of a vehicle brings about surface melting of the ice which is covered with a thin film of water harmful to the grip of these tires.

### [Citation List]

### [Patent Literature]

[PTL 1]
   JPH09-202116
[PTL 2]
   JP2008-30635

In order to improve the grip on the melting ice, tire manufacturers have provided different solutions related to the tires having the treads provided with incisions (grooves and/or sipe), which can absorb and/or store the harmful water.

A solution is a tire having a tread provided with groove(s), and a layered fiber chip having water expansion property, the fiber layer chip fixed on wall surface(s) of the groove(s) (Patent literature 1).

Another is a tire having a tread comprising a plurality of blocks provided with at least an incision whose wall surface is at least partially covered with a hydrophilic membrane (Patent literature 2).

However, the above both solutions requires to prepare the additional attachments, such as the fiber layer chip and the hydrophilic membrane, and to put them on the wall surfaces of the incisions, and therefore the production of tires may occur cost increases, and the process of production may be relatively complicated.

### [Summary of Invention]

### [Technical Problem]

The specific problem solved by the present invention: Now, on continuing their researches, the applicants have discovered as a new solution a tire having a novel and specific tread, which can efficiently absorb and store the harmful water during the rolling of the tire so that it is made possible to achieve the above objective, that is to say to improve the grip on melting ice without such as the above attachments.

As a tire has a geometry of revolution about an axis of rotation, the geometry of the tire is generally described in a meridian plane containing the axis of rotation of the tire, and the following definitions of directions of the tire are understood in the present application:
- A radial direction is a direction perpendicular to the axis of rotation of the tire;
- An axial direction is a direction parallel to the axis of rotation of the tire;
- A circumferential direction is a direction perpendicular to the meridian plane.

A plane being perpendicular to the axis of rotation of the tire and passing through the middle of a tread surface of the tire is referred to as an equatorial plane of the tire.

In what follows, expressions "radially", "axially" and "circumferentially" respectively mean "in the radial direction", "in the axial direction" and "in the circumferential direction". Expressions "radially on the inside (radially inner or radially internal), or respectively radially on the outside (radially outer or radially external)" mean "closer or, respectively, further away, from the axis of rotation of the tire, in the radial direction, than". Expressions "axially on the inside (axially inner or axially interior) or respectively axially on the outside (axially outer or axially exterior)" mean "closer or, respectively further away, from the equatorial plane, in the axial direction, than". Respective dimensions of a given element in the radial, axial and circumferential directions will also be denoted "radial thickness or height", "axial width" and "circumferential length" of this element.

Moreover, any interval of values denoted by the expression "between a and b" represents the range of values of greater than "a" and of less than "b" (i.e. the limits a and b excluded). Whereas any interval of values denoted by the expression "from a to b" means the range of values going from "a" to "b" (i.e. including the strict limits a and b).The abbreviation "phr" signifies parts by weight per hundred parts of elastomer or rubber (of the total of the elastomers if several elastomers are present).

In the present description, unless expressly indicated otherwise, each Tg (glass transition temperature) is measured in a known way by DSC (Differential Scanning Calorimetry) according to Standard ASTM D3418 (1999).

### [Solution to Problem]

Thus, as a first object (and a first aspect) of the invention is [1] a tire (1) which has a tread (2) having a contact surface (3) intended to come into contact with ground during rolling, the tread (2) comprising one or more of main grooves (4) circumferentially extending, a plurality of sub grooves (5) axially extending, and a plurality of blocks (6) delimited by the main grooves (4) and the sub grooves (5), the blocks (6) respectively having a top face (7) forming the contact surface (3) of the tread (2), two frontal faces (8, 9) axially extending and respectively facing to one of the sub grooves (5), and two lateral faces (10, 11) circumferentially extending and respectively facing to one of the main grooves (4), the blocks (6) also having a block width (BW), a block length (BL) and a block height (BH), the blocks (6) respectively provided with one or more of incisions (12, 13, 14, 15), the tire, being characterized in that: each of the blocks (6) comprises surface layer A extending along the top face (7), and surface layer B extending along at least a wall face laterally facing to each of the incisions (12, 13, 14, 15), each of the atomic percentages of nitrogen, oxygen and sulphur in the surface layer B is higher than those in the surface layer A, as measured by XPS (X-ray photoelectron spectroscopy), the atomic percentages being based on the total amount of carbon, nitrogen, oxygen, sulphur and silica atoms; wherein a water contact angle on the wall face of each of the incisions (12, 13, 14, 15) is lower than that on the top face (7) by more than 30° and wherein the water contact angle on the wall face of each of the incisions (12, 13, 14, 15) is lower than 80°.

Each of the atomic percentages of nitrogen, oxygen and sulphur in the surface layer B is greater than those in the surface layer A, that is, the surface layer B has higher polarity than that of the surface layer A. Thus, the surface layer B is relatively hydrophilic, which helps the incisions to efficiently absorb and store the harmful water during the rolling of the tire, and which makes it possible to improve the grip on melting ice.
[2] As an aspect of the invention is the tire (1) according to [1], wherein the atomic percentage of nitrogen in the surface layer B is higher than that in the surface layer A by more than 1.0% (preferably, more than 2.0%, more preferably, equal to or more than 3.0%, notably, from 3.0% to 4.0%), the atomic percentage of oxygen in the surface layer B is higher than that in the surface layer A by more than 2.5% (preferably, more than 5.0%, more preferably, equal to or more than 7.5%, still more preferably, from 7.5 to 9.5%), and the atomic percentage of sulphur in the surface layer B is higher than that in the surface layer A by more than 0.3% (preferably, more than 0.8%, more preferably, equal to or more than 1.3%, still more preferably, from 1.3 to 1.7%).
[3] As an aspect of the invention is the tire (1) according to [2], wherein the atomic percentage of nitrogen in the surface layer B is higher than 1.5% (preferably, higher than 2.5%, more preferably, equal to or higher than 3.5%, still more preferably, from 3.5% to 4.5%), the atomic percentage of oxygen in the surface layer B is higher than 3.0% (preferably, higher than 5.5%, more preferably, equal to or higher than 8.0%, still more preferably, from 8.0 to 10.0%), and the atomic percentage of sulphur in the surface layer B is higher than 0.4% (preferably, higher than 0.9%, more preferably, equal to or higher than 1.4%, still more preferably, from 1.4 to 2.0%).
The surface layer B exhibiting these ranges may more effectively help the incisions to absorb and store the harmful water during the rolling of the tire.
[4] As an aspect of the invention is the tire (1) according to any one of [1] to [3], wherein a water contact angle on the wall face of each of the incisions (12, 13, 14 and 15) is lower than that on the top face (7) by preferably, more than 60° , more preferably, equal to or more than 90°
[5] As an aspect of the invention is the tire (1) according to [4], wherein the water contact angle on the wall face of each of the incisions (12, 13, 14, 15) is lower by less than 50° , still more particularly, by equal to or less than 20°).
   The wall face of each of the incisions (12, 13, 14, 15), exhibiting these ranges derived from the property of the surface layer B, may more effectively help the incisions to absorb and store the harmful water during the rolling of the tire.
   The water contact angle can be measured at about 25°C based on JIS R3257: 1999 (sessile drop method and vertical plate method).
[6] As an aspect of the invention is the tire (1) according to any one of [1] to [5], wherein the incisions (12, 13, 14, 15) include one or more of the incisions (12, 13, 14, 15) respectively extending to form opening(s) to the sub groove(s) (5) at the frontal face(s) (8, 9) or to the main groove(s) (4) at the lateral face(s) (10, 11), and wherein each of the opening(s) has an opening width (w).
   That means the incisions (12, 13, 14, 15) include one or more of the incisions (12, 13, 14, 15) opening to at least one grooves selected among the main groove(s) (4) and the sub groove(s) (5). The incisions (12, 13, 14, 15) have a depth (d) extending along the direction in which the incisions (12, 13, 14, 15) extend and a height (h) extending in radial direction. Preferably, a ratio of the height (h) of the incisions (12, 13, 14, 15) to the block height (BH) is more than 50% (notably more than 50% and up to 100%), more preferably, from 70% to 100% (notably more than 70% and up to 100%), still more preferably from 90% to 100% (notably more than 90% and up to 100%), advantageously equal to 100%.
   The harmful water, which may be absorbed and stored by the incision(s) once, may be drained from the opening to the main groove(s) or the sub groove(s), which makes it possible to more effectively improve the grip on the melting ice.
[7] As an aspect of the invention is the tire (1) according to [6], wherein the incisions (12, 13, 14, 15) include one or more of the incisions (12) axially extending to be open at both of the lateral faces (10, 11).
   The incisions (12), which are both side open incisions, make it possible to more effectively improve the grip on the melting ice.
[8] As an aspect of the invention is the tire (1) according to [6], wherein the incisions (12, 13, 14, 15) include a plurality of the incisions (13) circumferentially extending to be open to one of the sub grooves (5) at one or both, preferably both, of the frontal faces (8, 9), and wherein a ratio of the sum of the opening widths (w) of the incisions (13) on each of the frontal faces (8, 9) to the block width (BW) is between 10% and 60%, preferably, between 15% and 50%, more preferably, between 20% and 40%, still more preferably, between 30% and 40%. Particularly, a ratio of depth (d) of the incisions (13) to the block length (BL) is between 0% and 30%, more particularly, between 1% and 20%, still more particularly, between 2% and 10%, notably between 3 and 5%.
   The incisions (13), which are one side open incisions, make it possible to more effectively improve the grip on the melting ice, especially for acceleration and/or braking on straightly traveling.
   Below the indicated minimum ratios, there is a risk to that the effect produced by the incisions will fade, whereas above the recommended maximum ratios, there is a risk to decrease rigidity of each of the blocks in the axial direction or the circumferential direction, which may affect stability performance of the tire.
[9] As an aspect of the invention is the tire (1) according to [8], wherein the incisions (12, 13, 14, 15) include one or more of additional incisions (12) axially extending to be open at both of the lateral faces (10, 11).
   The additional incisions (12), which are both side open incisions, may reinforce improvement of the grip on the melting ice.
[10] As an aspect of the invention is the tire (1) according to [9], wherein the incisions (12, 13, 14, 15) include a plurality of the incisions (14) circumferentially extending to be open to one of the additional incisions (12) at one of wall faces of the additional incisions (12). Preferably, a ratio of the sum of the opening widths (w) of the incisions (14) circumferentially extending to be open to one of wall faces of the additional incisions (12) axially extending to be open at both of the lateral faces (10, 11) to the block width (BW) is between 10% and 60%, preferably, between 15% and 50%, more preferably, between 20% and 40%, still more preferably, between 30% and 40%. Particularly, a ratio of depth (d) of the incisions (14) to the block length (BL) is between 0% and 30%, more particularly, between 1% and 20%, still more particularly, between 2% and 10%, notably between 3 and 5%.
   The incisions (14), which are one side open incisions, make it possible to more effectively improve the grip on the melting ice, especially for acceleration and/or braking on straightly traveling.
   Below the indicated minimum ratios, there is a risk to that the effect produced by the incisions will fade, whereas above the recommended maximum ratios, there is a risk to decrease rigidity of each of the blocks in the axial direction or the circumferential direction, which may affect stability performance of the tire.
[11] As an aspect of the invention is the tire (1) according to [10], wherein the incisions (12, 13, 14, 15) include a plurality of the incisions (15) at one or both, preferably both, of the lateral faces (10, 11), the incisions (15) axially extending to be open at one of the lateral faces (10, 11), and preferably, a ratio of the sum of the opening widths (w) of the incisions (15) axially extending to be open at one of the lateral faces (10, 11) to the block length (BL) is between 10% and 60%, preferably, between 15% and 50%, more preferably, between 20% and 40%. Particularly, a ratio of depth (d) of the incisions (15) to the block width (BW) is between 0% and 30%, more particularly, between 1% and 20%, still more particularly, between 2% and 10%, notably between 3 and 5%.
   The incisions (15), which are one side open incisions, may further reinforce improvement of the grip on the melting ice, especially when turning.
   Below the indicated minimum ratios, there is a risk to that the effect produced by the incisions will fade, whereas above the recommended maximum ratios, there is a risk to decrease rigidity of each of the blocks in the circumferential direction or the axial direction, which affect dry grip performance of the tire.
[12] As an aspect of the invention is the tire (1) according to any one of [6] to [11], wherein the opening width (w) is between 0.1 and 3.0 mm, preferably, between 0.2 and 2.5 mm, more preferably, between 0.3 and 2.0 mm, more preferably, from 0.4 to 1.5 mm.
   Below the indicated minimum or maximum, there is a risk to that the effect produced by the incisions will fade due to decrease of volume or capillarity of the incisions.
[13] As an aspect of the invention is the tire (1) according to any one of [6] to [12], wherein a product of the opening width (w) and the water contact angle on the wall face of each of the incisions (12, 13, 14, 15) is between 3 and 30 mm • ° (mm • degree), preferably between 5 and 20 mm • °.
   Below the indicated minimum or maximum, there is a risk to that the effect produced by the incisions will fade due to the relation between the opening width and the water contact angle on the wall face.
[14] As an aspect of the invention is the tire (1) according to any one of [1] to [13], wherein the surface layer B is nitrided and oxidated.
[15] As an aspect of the invention is the tire (1) according to [14], wherein the surface layer A consists of a rubber composition, and wherein the surface layer B consists of the rubber composition before nitriding and oxidation of the surface layer B.
   Nitriding and oxidation treatment(s) to the surface layer B may efficiently make the surface layer B relatively hydrophilic, and which makes it possible to improve the grip on melting ice without any additional attachment, for example, fiber layer chip or hydrophilic membrane.
[16] As an aspect of the invention is the tire (1) according to [14] or [15], wherein the rubber composition comprises at least a diene elastomer, a reinforcing filler and a vulcanization system.

The diene elastomer is generally understood to mean an elastomer resulting at least in part (i.e. a homopolymer or a copolymer) from diene monomers (monomers bearing two carbon-carbon double bonds which may or may not be conjugated).

The diene elastomer is preferably selected from the group consisting of natural rubber, synthetic polyisoprenes, polybutadienes, butadiene copolymers, isoprene copolymers and the mixtures thereof. Such copolymers are more preferably selected from the group consisting of butadiene/styrene copolymers (SBRs), isoprene/butadiene copolymers (BIRs), isoprene/styrene copolymers (SIRs), isoprene/butadiene/styrene copolymers (SBIRs) and mixtures thereof.

The rubber composition may contain a single diene elastomer or a mixture of several diene elastomers, it being possible for the diene elastomer(s) to be used in combination with any type of synthetic elastomer other than a diene elastomer, or even with polymers other than elastomers, for example thermoplastic polymers.

The reinforcing filler is preferably selected from the group consisting of carbon black, inorganic filler and the mixture thereof.

All carbon blacks, especially blacks of the HAF, ISAF or SAF type, conventionally used in tires are suitable as carbon blacks. As non-limiting examples of such blacks, mention may be made of the N115, N134, N234, N330, N339, N347 and N375 blacks.

Such inorganic filler comprises silica, especially highly dispersible silicas, for example the Ultrasil 7000 and Ultrasil 7005 silicas from Evonik, the Zeosil 1165 MP, 1135 MP and 1115 MP silicas from Rhodia, the Hi-Sil EZ150G silica from PPG, the Zeopol 8715, 8745 and 8755 silicas from Huber.

As other examples of inorganic filler that can be used in the rubber composition, mention will also be made of mineral fillers of the aluminous type, in particular alumina (Al₂O₃), or aluminium (oxide) hydroxides, or else reinforcing titanium oxides, for example described in WO 99/28376 (US 6 610 261) and WO 00/73372 (US 6 747 087).

A person skilled in the art will understand that, as filler equivalent to the reinforcing inorganic filler described in the present section, a reinforcing filler of another nature, in particular organic nature, could be used, provided that this reinforcing filler is covered with an inorganic layer, such as silica, or else comprises functional sites, in particular hydroxyl sites, at its surface that require the use of a coupling agent in order to form the bond between the filler and the elastomer.

The vulcanization system is preferably based either on sulphur or on sulphur donors and/or on peroxide and/or on bismaleimides, vulcanization accelerators, vulcanization activators and optionally vulcanization retarders.

The rubber composition may also comprise all or some of the standard additives customarily used in the elastomer compositions intended for the manufacture of tires, such as for example plasticizer system selected from the group consisting of liquid plasticizer, hydrocarbon resin and the mixture thereof , pigments, protective agents, such as antiozone waxes, chemical antiozonants, antioxidants, antifatigue agents, reinforcing resins, methylene acceptors (for example phenolic novolac resin) or methylene donors (for example HMT or H3M).

[17] As an aspect of the invention is the tire (1) according to [16], wherein the rubber composition comprises less than 10 phr of the protective agent, preferably, less than 5 phr, more preferably, less than 3 phr.

Each of the above aspects including each of the preferred range(s) and/or matter(s) may be applied to any one of the other aspects or the embodiments of the invention.

### [Brief Description of Drawings]

Other characteristics and advantages of the invention arise from the description made hereafter in reference to the annexed drawings which show, as nonrestrictive examples, of the embodiments of the object of the invention.

In these drawings:
[Fig. 1]

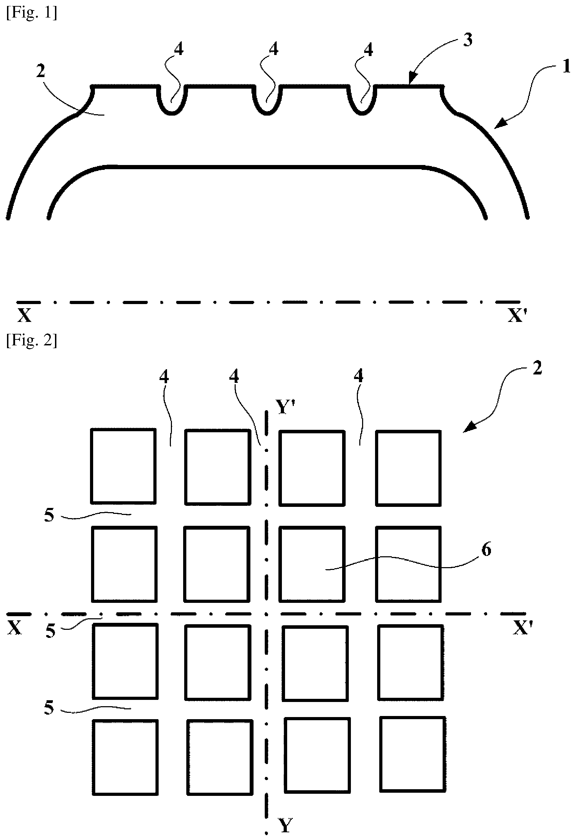

   Fig. 1 shows a schematic view of a tire cross sectional view according to the present invention;
[Fig. 2]
   Fig. 2 shows a plan view of a tread according to the present invention;
[Fig. 3]

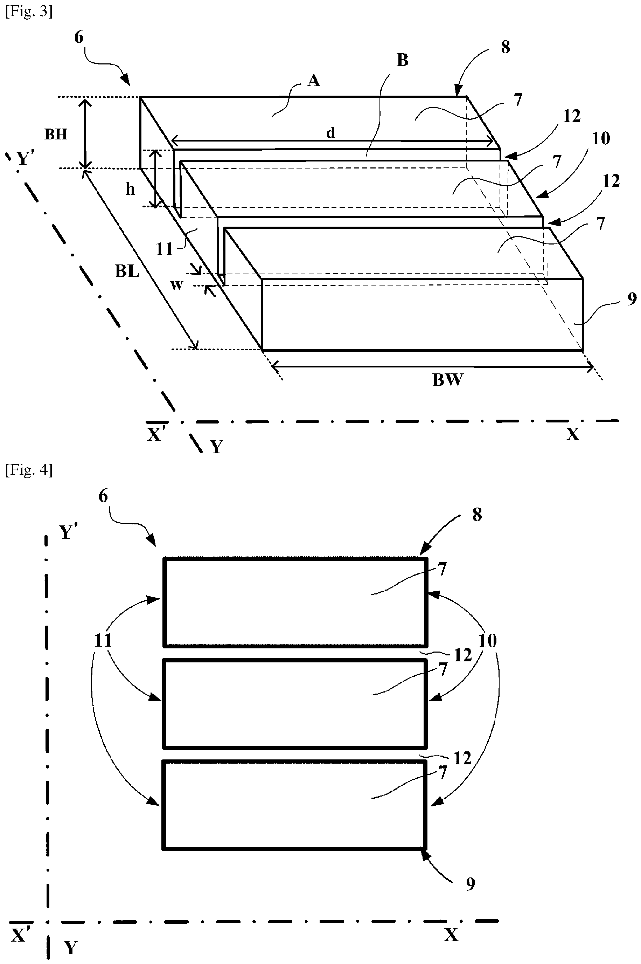

   Fig. 3 shows a schematic view of a block of a first embodiment;
[Fig. 4]
   Fig. 4 shows a plan view of a block of the first embodiment;
[Fig. 5]

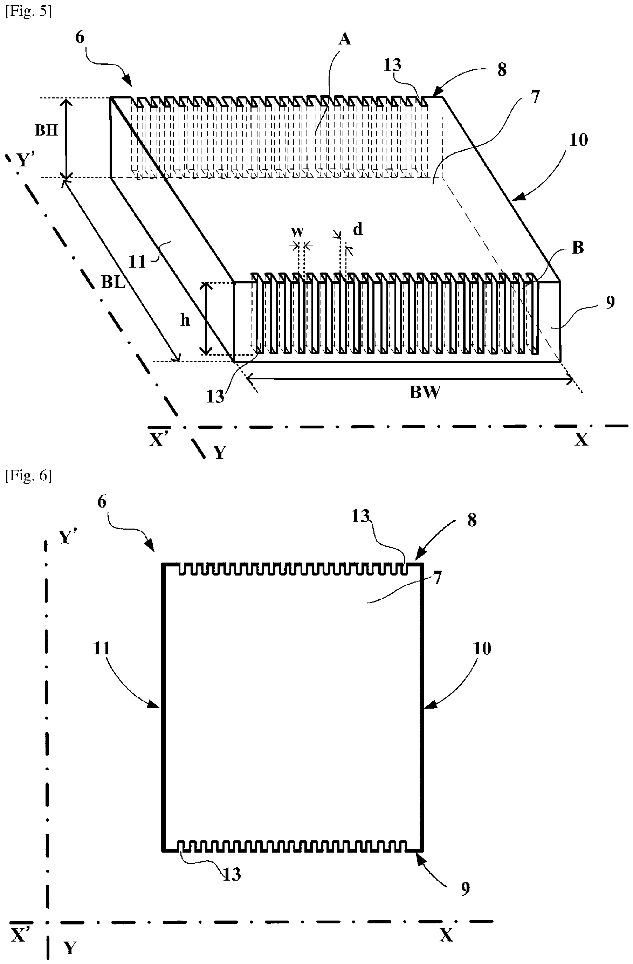

   Fig. 5 shows a schematic view of a block of a second embodiment;
[Fig. 6]
   Fig. 6 shows a plan view of a block of the second embodiment;
[Fig. 7]

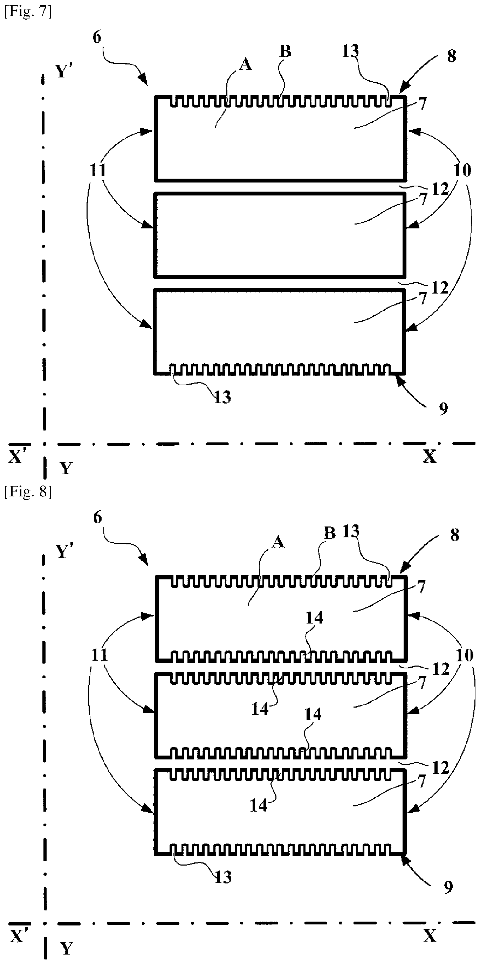

   Fig. 7 shows a plan view of a block of a third embodiment;
[Fig. 8]
   Fig. 8 shows a plan view of a block of a fourth embodiment;
[Fig. 9]

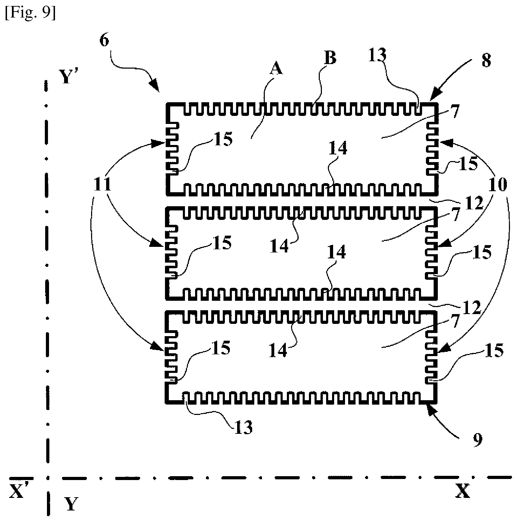

   Fig. 9 shows a plan view of a block of a fifth embodiment.

### [Description of Embodiments]

The appended FIG. 1 schematically (in particular not to a specific scale) represents, in radial cross section, a tire (1) according to the present invention.

The tires of the invention are particularly intended to be equipped to passenger motor vehicles, including 4×4 (four-wheel drive) vehicles and SUV (Sport Utility Vehicles) vehicles, and also industrial vehicles in particular chosen from vans and heavy duty vehicles (i.e., bus or heavy road transport vehicles (lorries, tractors, trailers)).

In the Fig. 1, the tire (1) has a tread (2) having a contact surface (3) intended to come into contact with ground during rolling, the tread (2) comprising main grooves (4) circumferentially extending.

The Fig. 2 illustrates the tread (2) which comprises the main grooves (4) circumferentially (in the circumferential direction (Y-Y')) extending, sub grooves (5) axially (in the axial direction (X-X')) extending, and a plurality of blocks (6) delimited by the circumferential main grooves (4) and the sub grooves (5).

The Figs. 3 to 9 illustrate the block (6) which has a top face (7) forming the contact surface of the tread, two frontal faces (8, 9) axially extending and respectively facing to one of the sub grooves, and two lateral faces (10, 11) circumferentially extending and respectively facing to one of the main grooves, the block (6) provided with a plurality of incisions (12, 13, 14, 15), wherein each of the blocks (6) comprises surface layer A extending along the top face (7) and having a thickness perpendicular to the top face (7), and surface layer B extending along at least a wall face laterally facing to each of the incisions (12, 13, 14, 15), and having a thickness perpendicular to the wall face, and wherein each of the atomic percentages of nitrogen, oxygen and sulphur in the surface layer B is higher than those in the surface layer A, as measured by XPS (X-ray photoelectron spectroscopy), the atomic percentages being based on the total amount of carbon, nitrogen, oxygen, sulphur and silica atoms. The surface layer B preferably further includes the portion of the block (6) at the radially bottom of the incisions (12, 13, 14, 15).

The surface layer A is an outermost layer having a thickness from the top face in a direction perpendicular to the top face, while the surface layer B is another outermost layer having the thickness from a wall face facing to each of the incisions in a direction perpendicular to the wall face, which are measured by XPS.

More specifically, the thicknesses of surface layers A and B are about 1 nm to several nanometers (for instance, 10 nm) through which photoelectrons generated by irradiation of the each face with an X-ray are released.

XPS (X-ray photoelectron spectroscopy) is known by a person skilled in the art, in a molecule art field, since the energy of the electrons of an atom are influenced by neighbors of the atom, this measurement can differentiate various atoms which belong to one and the same element but are not involved in one and the same chemical function. Thus, the energies corresponding to the various atoms of samples make it possible, from XPS spectra, to measure the atomic percentages of the various elements, which are known from the following documents(S. Petit-Boileau. Doctoral thesis of the Universito Pierre et Marie Curie (2003); M. Asandulesa, I. Topala, V. Pohoata, N. Dumitrascu. J. Appl. Phys. 108 (2010) 093310; N. K. Cuong, N. Saeki, S. Kataoka, S. Yoshikawa. Hyomen Kagaru (J. of The Surface Science Society of Japan) 23 (2002) 202-208; H. Krump, I. Hudec, M.lasso, E. Dayss, A. S. Luyt. Applied Surface Science 252 (2006) 4264-4278 and M. Lejeune, F. Bretagnol, G. Ceccone, P. Colpo, F. Rossi. Surface & Coatings Technology 200(2006) 5902-5907).

An area of each peak corresponds to the atomic percentage of each atom which is associated therewith. For example, when the area of the peaks associated with the two types of oxygen atom (C=O and C-O of the ester function) are measured, these peaks associated with the oxygen atoms of the C-O bond and C=O bond are between 530 and 536 eV. As another example, when the area of the peaks corresponding to the three types of carbon atom (benzene carbons, C=O and carbon from the ester chain) is measured, these peaks associated with the carbon atoms of the O=C-O bond, the C-O bond, the C-C and C-H bonds are between 280 and 292 eV.

The atomic percentage of the peaks associated with each atom (for instance, oxygen atom) is calculated by taking the ratio of the area of the peaks associated with all target atoms (for instance, carbon, nitrogen, oxygen, sulphur and silica atoms) of the spectrum. The areas used for the calculation of the ratio are the Scofield cross sections. The baselines used for the numerical simulation are of Shirley type. After acquisition, the curves are preferably rectified.

The surface layer B exhibits higher each of atomic percentages of nitrogen, oxygen and sulphur atoms than that in the surface A, which may be obtained by virtue of suitable treatment, for example, nitriding and oxidation treatment on the wall faces to each of the incisions (12, 13, 14, 15), and optionally on the radial, circumferential or axial bottom of each of the incisions (12, 13, 14, 15), which may make some carbon atom(s) thereon react with nitrogen and/or oxygen atom(s), remove some other carbon atom(s) therefrom, and sulphur atom(s) inside the rubber composition forming the blocks (6) appear thereon.

According to a preferred embodiment, each of the blocks (6) comprises the surface layer B nitrided and oxidated on the wall faces to each of the incisions (12, 13, 14, 15) by a plasma treatment, more preferably DC plasma treatment or RF plasma treatment, still more preferably DC plasma treatment. Particularly, gas used during the plasma treatment is a mixed gas containing nitrogen and oxygen, more particularly, about 80% of nitrogen and about 20% of oxygen, still more particularly, normal atmospheric air (78% of nitrogen, 21% of oxygen and 1% of trace gases). Advantageously, the operational pressure used during the plasma treatment is from 0.1 to 1.0 Pa, and the treatment time is from 10 to 900 seconds, more advantageously from 90 to 900 seconds.

In the FIGs.3 and 5, the block has a block length extending in circumferential direction (BL: 25.4 mm), a block width extending in axial direction (BW: 23.8 mm) and a block height extending in radial direction (BH: 9.0 mm), the incisions have a depth (length) extending along the direction in which the incisions (12, 13) extend (d: 23.8 mm (12) or 0.8 mm (13)) and a height extending in radial direction (h: 9.0 mm), and the openings have an opening width extending perpendicular to the direction in which the incisions (12, 13) extends at the opening (w: 0.4 or 1.0 mm).

In the FIGs. 3 and 4, the block (6) is provided with two incisions (12) axially extending to be open at both of the lateral faces (10, 11), that is, the both sides of the incisions (12) being both side open incisions to the main grooves, wherein the opening width (w) is 0.4 or 1.0 mm. In the embodiment shown in FIGs. 3 and 4, the surface layer A comprises a portion of the block (6) exposed to the outside along the top surface (7), and the surface layer B comprises portions of the block (6) circumferentially facing to each of the incisions (12). Preferably, the surface layer B comprises the portions of the block (6) at the radial bottoms of the incisions (12).

In the FIGs. 5 and 6, the block (6) is provided with forty two incisions (13) at both of the frontal faces (8, 9), that is, twenty one incisions (13) at each of frontal faces (8, 9), the incisions (13) circumferentially extending to be open to one of the sub grooves, that is, the incisions (13) being one side open incisions, wherein the opening width (w) is 0.4 mm, wherein a ratio of the sum of the opening widths of the incisions (13) on each of the lateral faces (8, 9) to the block width (BW) is about 35%, wherein a ratio of the depth (d: 0.8 mm) of the block length (BL: 25.4 mm) is about 3.3%, and wherein a ratio of the height (h: 9.0 mm) to the block height (BH: 9.0 mm) is 100%. In the embodiment shown in the FIGs. 5 and 6, the surface layer A comprises a portion of the block (6) exposed to the outside along the top surface (7), and the surface layer B comprises portions of the block (6) axially facing to each of the incisions (13) and portions of the block (6) circumferentially facing to the incisions (13). Preferably, the surface layer B comprises portions of the block (6) at the circumferential bottoms of the incisions (13).

In the FIG. 7, comparing with the embodiment shown in the FIG.5 and 6, the block (6) is additionally provided with two incisions (12) which axially extend to be open to the main grooves at both of the lateral faces (10, 11), that is, the additional incisions (12) are both side open incisions, and wherein the opening width of the additional incisions (12) is 1.0 mm. In the embodiment shown in the FIG. 7, the surface layer B further comprises portions of the block (6) circumferentially facing to each of the additional incisions (12). Preferably, the surface layer B comprises the portions of the block at the radial bottoms of the additional incisions (12).

In the FIG. 8, comparing with the embodiment shown in the FIG.7, the block (6) is additionally provided with forty two incisions (14), which are one side open incisions, circumferentially extending to be open to each of the other incisions (12) axially extending to open at both of the lateral faces (10, 11), wherein total number of the incisions (14) is 82, and wherein the opening width of the additional incisions (14) is 0.4 mm. In the embodiment shown in the FIG. 8, the surface layer B further comprises portions of the block (6) axially facing to each of the incisions (14) and portions of the block (6) circumferentially facing to the incisions (14). Preferably, the surface layer B comprises the portions of the block at the radial bottoms of the additional incisions (14).

The FIG. 9 illustrates that, comparing with the embodiment shown in the FIG.8, the block (6) is additionally provided with thirty incisions (15) at both of the lateral faces (10, 11), that is, fifty incisions (15) at each of the lateral faces (10, 11), the incisions (15) axially extending to be open at one of the lateral face (10, 11), that is, the incisions (15) being one side open incisions, and wherein the opening width of the additional incisions (15) is 0.4 mm. In the embodiment shown in FIG. 9, the surface layer B further comprises portions of the block (6) circumferentially facing to each of the additional incisions (15), and portions of the block (6) axially facing to the additional incisions (15). Preferably, the surface layer B comprises the portions of the block at the axial bottoms of the additional incisions (15).

The invention is further illustrated by the following non-limiting examples.

In these tests, five block samples (identified as B-1 (a reference), B-2 (a comparative example), B-3, B-4 and B-5 (examples according to the present invention)) comprising a rubber composition based on a diene elastomer (SBR/BR) are compared, and a formulation of the rubber composition (content of the various products in phr) is given in Table 1.

**[Table 1]**

| | Rubber composition |
|---|---|
| SBR (1) | 60 |
| BR (2) | 40 |
| Carbon black (3) | 100 |
| Non aromatic oil (4) | 30 |
| Hydrocarbon resin (5) | 40 |
| ZnO | 1.5 |
| Stearic acid | 0.2 |
| Sulphur | 1.4 |
| Accelerator (6) | 1.6 |

| | |
|---|---|
| (1) SBR: SBR (Sn star-branched) with 27% of styrene units and 24% of 1,2- units of the butadiene part bearing a silanol function at the end of the elastomer chain (Tg = -48°C); (2) BR with 0.3% of 1,2 vinyl; 2.7% of trans; 97% of cis-1,4 (Tg = -105°C); (3) ASTM grade N234 (Cabot); (4) Oleic sunflower oil ("Agripure 80" from Cargill, Weight percent oleic acid: 100%); (5) Hydrocarbon resin C₅/C₉ type ("Escorez ECR-373" from Exxon); (6) N-dicyclohexyl-2-benzothiazolesulphenamide ("Santocure CBS" from Flexsys). | |

The diene elastomer(s), the reinforcing filler and the various other ingredients, with the exception of the vulcanization system, were successively introduced into an internal mixer having an initial vessel temperature of approximately 60°C; the mixer was thus approximately 70% full (% by volume). Thermomechanical working (non-productive phase) was then carried out in one stage, which lasted in total approximately 3 to 4 minutes, until a maximum "dropping" temperature of 165°C was reached. The mixture thus obtained was recovered and cooled and then sulphur and an accelerator of sulphenamide type were incorporated into an external mixer (homofinisher) at 30°C, everything being mixed (productive phase) for an appropriate time (for example between 5 and 12 min).

The composition thus obtained was subsequently calendered, either in the form of sheets (for example, thickness: 2 to 3 mm) or of fine sheets of rubber, for the measurement of their physical or mechanical properties, or in the form of profiled elements which could be used directly, after cutting and/or assembling to the desired dimensions, for example as tire semi-finished products, in particular as tire treads.

Each of the five block samples has a block design having a plurality of incisions as shown in Table 2.

**[Table 2]**

| | Reference | Comparative example | Examples according to the present invention | | |
|---|---|---|---|---|---|
| | B-1 | B-2 | B-3 | B-4 | B-5 |
| Figure | Fig.4 | Fig.4 | Fig.4 | Fig.4 | Fig.9 |
| Width of both sides open incision (mm) | 0.4 | 1.0 | 0.4 | 1.0 | 1.0 |
| Width of one side open incision (mm) | - | - | - | - | 0.4 |

Subsequently, after cuing, a plasma treatment was performed on the wall faces and also the radial, circumferential or axial bottoms of the incisions (12, 13, 14, 15) in each of the examples (B-3, B-4 and B-5) according to the present invention with a DC plasma method, for 90 seconds using normal atmospheric air as a processing gas. During the plasma treatment, the top faces in each of the examples were covered with a carbon tape as a masking material. The DC power used to generate plasma was 9 W and the operational pressure was about 0.1 Pa.

Atomic percentages of carbon, nitrogen, oxygen, sulphur and silica in the surface layer A and the surface layer B of the five block samples after the plasma treatment by X-ray photoelectron spectroscopy (XPS) are shown in Table 3.

Table 3 indicates each of the atomic percentages of nitrogen, oxygen and sulphur in the surface layer B comprising the wall faces, where the plasma treatment was implemented, is higher than that in the surface layer A.

**[Table 3]**

| | | Reference | | Comparative example | | Examples according to the present invention | | | | | |
|---|---|---|---|---|---|---|---|---|---|---|---|
| | | B-1 | | B-2 | | B-3 | | B-4 | | B-5 | |
| Surface layer | | A | B | A | B | A | B | A | B | A | B |
| Atomic percentages measure d by XPS in each surface layer (%) | C | 99.80 | 99.80 | 99.80 | 99.80 | 99.80 | 85.90 | 99.80 | 85.90 | 99.80 | 85.90 |
| | N | 0.00 | 0.00 | 0.00 | 0.00 | 0.00 | 4.00 | 0.00 | 4.00 | 0.00 | 4.00 |
| | O | 0.15 | 0.15 | 0.15 | 0.15 | 0.15 | 8.60 | 0.15 | 8.60 | 0.15 | 8.60 |
| | S | 0.05 | 0.05 | 0.05 | 0.05 | 0.05 | 1.50 | 0.05 | 1.50 | 0.05 | 1.50 |
| | Si | 0.00 | 0.00 | 0.00 | 0.00 | 0.00 | 0.00 | 0.00 | 0.00 | 0.00 | 0.00 |

Water contact angles on the top faces and the wall faces of the incisions of the five block samples are expressed in Table 4. Unit of the result is degree. The water contact angle was measured at about 25°C based on JIS R3257: 1999 (sessile drop method).

**[Table 4]**

| | Reference | | Comparative example | | Examples according to the present invention | | | | | |
|---|---|---|---|---|---|---|---|---|---|---|
| | B-1 | | B-2 | | B-3 | | B-4 | | B-5 | |
| Face | Top face | Wall face of the incisions | Top face | Wall face of the incisions | Top face | Wall face of the incisions | Top face | Wall face of the incisions | Top face | Wall face of the incisions |
| Contact angle (°) (7) | 110 | 110 | 110 | 110 | 110 | 15 | 110 | 15 | 110 | 15 |

| | | | | | | | | | | |
|---|---|---|---|---|---|---|---|---|---|---|
| (7) Measured at about 25 °C based on JIS R3257: 1999. | | | | | | | | | | |

Friction coefficients on ice for the five block samples are given in Table 5, a value greater than that of the reference (B-1), arbitrarily set at 100, indicating an improved result, i.e. an aptitude for a shorter braking distance. The principle is based on a block sample that slides at a given speed (for example equal to 5 km/h) over an ice track (temperature of the ice set at -2°C) with an imposed load (for example equal to 3 kg/cm²). The forces generated in the direction of travel (Fx) of the pad and perpendicular to the travel (Fz) are measured; the ratio Fx/Fz determines the friction coefficient of the test specimen on ice. The principle of this test is well known to person skilled in the art (see for example Patent Applications EP 1 052 270, EP 1 505 112 and WO 2010/009850). That makes it possible to evaluate, under representative conditions, the grip on melting ice that would be obtained during a running test on a vehicle equipped with tires whose tread consists of the same rubber compositions.

The results from Table 5 demonstrate that the examples (B-3 to B-5) in which the surface layer B exhibits higher atomic percentages of nitrogen, oxygen and sulphur than those in the surface layer A, and the water contact angle on the wall faces of the incisions is lower than that of the top face, which have surely improved friction coefficient on ice rather than the reference and the comparative example.

**[Table 5]**

| | Reference | Comparative example | Examples according to the present invention | | |
|---|---|---|---|---|---|
| | B-1 | B-2 | B-3 | B-4 | B-5 |
| Melting ice grip index (8) | 100 | 90 | 105 | 110 | 130 |

| | | | | | |
|---|---|---|---|---|---|
| (8) Friction test on icy road (at -2°C). | | | | | |

## Claims

1. A tire (1) which has a tread (2) having a contact surface (3) intended to come into contact with ground during rolling, the tread (2) comprising one or more of main grooves (4) circumferentially extending, a plurality of sub grooves (5) axially extending, and a plurality of blocks (6) delimited by the main grooves (4) and the sub grooves (5);
the blocks (6) respectively having a top face (7) forming the contact surface (3) of the tread (2), two frontal faces (8, 9) axially extending and respectively facing to one of the sub grooves (5), and two lateral faces (10, 11) circumferentially extending and respectively facing to one of the main grooves (4), the blocks (6) also having a block width (BW), a block length (BL) and a block height (BH), the blocks (6) respectively provided with one or more of incisions (12, 13, 14, 15), the tire, being **characterized in that**:
- each of the blocks (6) comprises surface layer A extending along the top face (7), and surface layer B extending along at least a wall face laterally facing to each of the incisions (12, 13, 14, 15);
- each of the atomic percentages of nitrogen, oxygen and sulphur in the surface layer B is higher than those in the surface layer A, as measured by XPS (X-ray photoelectron spectroscopy), the atomic percentages being based on the total amount of carbon, nitrogen, oxygen, sulphur and silica atoms;
wherein a water contact angle on the wall face of each of the incisions (12, 13, 14, 15) is lower than that on the top face (7) by more than 30° ;
wherein the water contact angle on the wall face of each of the incisions (12, 13, 14, 15) is lower than 80° .

2. The tire (1) according to Claim 1, wherein the atomic percentage of nitrogen in the surface layer B is higher than that in the surface layer A by more than 1.0%, the atomic percentage of oxygen in the surface layer B is higher than that in the surface layer A by more than 2.5%, and the atomic percentage of sulphur in the surface layer B is higher than that in the surface layer A by more than 0.3%.

3. The tire (1) according to Claim 2, wherein the atomic percentage of nitrogen in the surface layer B is higher than 1.5%, the atomic percentage of oxygen in the surface layer B is higher than 3.0%, and the atomic percentage of sulphur in the surface layer B is higher than 0.4%.

4. The tire (1) according to any one of Claims 1 to 3, wherein the incisions (12, 13, 14, 15) include one or more of the incisions (12, 13, 14, 15) respectively extending to form opening(s) to the sub groove(s) (5) at the frontal face(s) (8, 9) or to the main groove(s) (4) at the lateral face(s) (10, 11), and wherein each of the opening(s) has an opening width (w).

5. The tire (1) according to Claim 4, wherein the incisions (12, 13, 14, 15) include one or more of the incisions (12) axially extending to be open at both of the lateral faces (10, 11).

6. The tire (1) according to Claim 4, wherein the incisions (12, 13, 14, 15) include a plurality of the incisions (13) circumferentially extending to be open to one of the sub grooves (5) at one or both of the frontal faces (8, 9), and wherein a ratio of the sum of the opening widths (w) of the incisions (13) on each of the frontal faces (8, 9) to the block width (BW) is between 10% and 60%.

7. The tire (1) according to Claim 6, wherein the incisions (12, 13, 14, 15) include one or more of additional incisions (12) axially extending to be open at both of the lateral faces (10, 11).

8. The tire (1) according to Claim 7, wherein the incisions (12, 13, 14, 15) include a plurality of the incisions (14) circumferentially extending to be open to one of the additional incisions (12) at one of wall faces of the additional incisions (12).

9. The tire (1) according to Claim 8, wherein each of the incisions (12, 13, 14, 15) include a plurality of the incisions (15) at one or both of the lateral faces (10, 11), the incisions (15) axially extending to be open at one of the lateral faces (10,11).

10. The tire (1) according to any one of Claims 4 to 9, wherein the opening width (w) is between 0.1 and 3.0 mm.

11. The tire (1) according to any one of Claims 4 to 10, wherein a product of the opening width (w) and the water contact angle on the wall face of each of the incisions (12, 13, 14, 15) is between 3 and 30 mm • ° .

12. The tire (1) according to any one of Claims 1 to 11, wherein the surface layer B is nitrided and oxidated.

13. The tire (1) according to Claim 12, wherein the surface layer A consists of a rubber composition, and wherein the surface layer B consists of the rubber composition before nitriding and oxidation of the surface layer B.

14. The tire (1) according to Claim 12 or Claim 13, wherein the rubber composition comprises at least a diene elastomer, reinforcing filler and a vulcanization system.

15. The tire (1) according to Claim 14, wherein the rubber composition comprises less than 10 phr of protective agent.

## Patentansprüche

1. Reifen (1), der eine Lauffläche (2) aufweist, die eine Kontakt-Oberfläche (3) aufweist, die dazu bestimmt ist, während des Rollens mit dem Boden in Kontakt zu kommen, wobei die Lauffläche (2) eine oder mehrere Hauptnut(en) (4), die sich umfangsgemäß erstrecken, wobei sich eine Vielzahl von Nebenuten (5) axial erstreckt, und eine Vielzahl von Blöcken (6), die durch die Hauptnuten (4) und die Nebennuten (5) begrenzt sind, umfasst;
wobei die Blöcke (6) jeweils eine obere Seite (7) aufweisen, die die Kontaktoberfläche (3) der Lauffläche (2) bildet, wobei sich zwei vordere Seiten (8, 9) axial erstrecken und jeweils zu einer der Teilnuten (5) gegenüberliegen und zwei laterale Seiten (10, 11) sich umfangsgemäß erstrecken und jeweils einer der Hauptnuten (4) gegenüberliegen, wobei die Blöcke (6) ebenfalls eine Blockbreie (BW), eine Blocklänge (BL) und eine Blockhöhe (BH) aufweisen, wobei die Blöcke (6) jeweils mit einem oder mehreren Einschnitt(en) (12, 13, 14, 15) bereitgestellt sind, wobei der Reifen **dadurch gekennzeichnet ist, dass**:
- jeder der Blöcke (6) eine Oberflächenschicht A, die sich entlang der oberen Seite (7) erstreckt, und eine Oberflächenschicht B, die sich entlang wenigstens einer Wandseite erstreckt, die jedem Einschnitt (12, 13, 14, 15) lateral gegenüberliegt, umfasst;
- jeder der Atomprozentsätze des Stickstoffs, Sauerstoffs und Schwefels in der Oberflächenschicht B höher ist als die in der Oberflächenschicht A gemäß Messung per XPS (Röntgenphotoelektronen-Spektroskopie), wobei die Atomprozentsätze auf der Gesamtmenge aus Kohlenstoff-, Stickstoff-, Sauerstoff-, Schwefel- und Kieselerde-Atomen basieren;
wobei ein Wasserkontakt-Winkel auf der Wandseite jedes Einschnitts (12, 13, 14, 15) um mehr als 30° niedriger ist als auf der oberen Seite (7);
wobei der Wasserkontakt-Winkel auf der Wandseite jedes Einschnitts (12, 13, 14, 15) um mehr als 80° niedriger ist.

2. Reifen (1) gemäß Anspruch 1, wobei der Stickstoff-Atomprozentsatz in der Oberflächenschicht B um 1,0 % höher ist als in der Oberflächenschicht A, der Sauerstoff-Atomprozentsatz in der Oberflächenschicht B um mehr als 2,5 % höher ist als in der Oberflächenschicht A und der Schwefel-Atomprozentsatz in der Oberflächenschicht B um mehr als 0,3 % höher ist als in der Oberflächenschicht A.

3. Reifen (1) gemäß Anspruch 2, wobei der Stickstoff-Atomprozentsatz in der Oberflächenschicht B um 1,5% höher ist, der Sauerstoff-Atomprozentsatz in der Oberflächenschicht B um 3,0% höher ist und der Schwefel-Atomprozentsatz in der Oberflächenschicht B um mehr als 0,4% höher ist.

4. Reifen (1) gemäß irgendeinem der Ansprüche 1 bis 3, wobei die Einschnitte (12, 13, 14, 15) einen oder mehrere Einschnitt(e) (12, 13, 14, 15) enthalten, die sich jeweils erstrecken, um (eine) Öffnung(en) zu der (den) Teilnut(en) (5) an der (den) vorderen Seite(n) (8, 9) oder der (den) Hauptnut(en) (4) an der (den) lateralen Seite(n) (10, 11) zu bilden und wobei jede Öffnung eine Öffnungsbreite (w) aufweist.

5. Reifen (1) gemäß Anspruch 4, wobei die Einschnitte (12, 13, 14, 15) einen oder mehrere Einschnitt(e) (12) enthalten, der (die) sich axial erstreckt (erstrecken), um an den beiden lateralen Seiten (10, 11) offen zu sein.

6. Reifen (1) gemäß Anspruch 4, wobei die Einschnitte (12, 13, 14, 15) eine Vielzahl von Einschnitten (13) enthalten, die sich umfangsgemäß erstrecken, um zu einer der Teilnuten (5) an einer oder beiden der vorderen Seiten (8, 9) offen zu sein und wobei ein Verhältnis der Summe der Öffnungsbreiten (w) der Einschnitte (13) auf jeder der vorderen Seiten (8, 9) zu der Blockbreite (BW) zwischen 10 % und 60 % beträgt.

7. Reifen (1) gemäß Anspruch 6, wobei die Einschnitte (12, 13, 14, 15) einen oder mehrere zusätzliche(n) Einschnitt(e) (12) enthalten, der (die) sich axial erstreckt (erstrecken), um an den beiden lateralen Seiten (10, 11) offen zu sein.

8. Reifen (1) gemäß Anspruch 7, wobei die Einschnitte (12, 13, 14, 15) eine Vielzahl von Einschnitten (14) enthalten, die sich umfangsgemäß erstrecken, um zu einem der zusätzlichen Einschnitte (12) an einer der Wandseiten der zusätzlichen Einschnitte (12) offen zu sein.

9. Reifen (1) gemäß Anspruch 8, wobei jeder Einschnitt (12, 13, 14, 15) eine Vielzahl von Einschnitten (15) an einer oder beiden der lateralen Seite(n) (10, 11) enthält, wobei sich die Einschnitte (15) axial erstrecken, um an einer der lateralen Seiten (10, 11) offen zu sein.

10. Reifen (1) gemäß irgendeinem der Ansprüche 4 bis 9, wobei die Öffnungsbreite (w) zwischen 0,1 und 3,0 mm beträgt.

11. Reifen (1) gemäß irgendeinem der Ansprüche 4 bis 10, wobei ein Produkt der Öffnungsbreite (w) und der Wasserkontakt-Winkel auf der Wandseite jedes Einschnitts (12, 13, 14, 15) zwischen 3 und 30 mm • ° beträgt.

12. Reifen (1) gemäß irgendeinem der Ansprüche 1 bis 11, wobei die Oberflächenschicht B nitriert oder oxidiert ist.

13. Reifen (1) gemäß Anspruch 12, wobei die Oberflächenschnitt A aus einer Gummizusammensetzung besteht und wobei die Oberflächenschicht B aus der Gummizusammensetzung vor dem Nitrieren und Oxidieren der Oberflächenschicht B besteht.

14. Reifen (1) gemäß Anspruch 12 oder Anspruch 13, wobei die Gummizusammensetzung wenigstens ein Dien-Elastomer umfasst, das den Füller und ein Vulkanisierungssystem verstärkt.

15. Reifen (1) gemäß Anspruch 14, wobei die Gummizusammensetzung weniger als 10 phr an Schutzwirkstoff umfasst.

## Revendications

1. Pneumatique (1) qui comporte une bande de roulement (2) ayant une surface de contact (3) destinée à venir en contact avec le sol pendant le roulement, la bande de roulement (2) comprenant une ou plusieurs rainures principales (4) s'étendant circonférentiellement, une pluralité de sous-rainures (5) s'étendant axialement, et une pluralité de blocs (6) délimités par les rainures principales (4) et les sous-rainures (5) ;
les blocs (6) ayant respectivement une face supérieure (7) formant la surface de contact (3) de la bande de roulement (2), deux faces frontales (8, 9) s'étendant axialement et faisant respectivement face à l'une des sous-rainures (5), et deux faces latérales (10, 11) s'étendant circonférentiellement et faisant respectivement face à l'une des rainures principales (4), les blocs (6) ayant également une largeur de bloc (BW), une longueur de bloc (BL) et une hauteur de bloc (BH), les blocs (6) étant respectivement pourvus d'une ou plusieurs incisions (12, 13, 14, 15), le pneumatique étant **caractérisé en ce que** :
- chacun des blocs (6) comprend une couche de surface A s'étendant le long de la face supérieure (7), et une couche de surface B s'étendant le long d'au moins une face de paroi faisant latéralement face à chacune des incisions (12, 13, 14, 15) ;
- chacun des pourcentages atomiques d'azote, d'oxygène et de soufre dans la couche de surface B est supérieur à ceux dans la couche de surface A, tels que mesurés par XPS (spectroscopie de photoélectrons à rayons X), les pourcentages atomiques étant basés sur la quantité totale d'atomes de carbone, d'azote, d'oxygène, de soufre et de silice ;
dans lequel un angle de contact d'eau sur la face de paroi de chacune des incisions (12, 13, 14, 15) est inférieur à celui sur la face supérieure (7) de plus de 30° ;
dans lequel l'angle de contact d'eau sur la face de paroi de chacune des incisions (12, 13, 14, 15) est inférieur à 80°.

2. Le pneumatique (1) selon la revendication 1, dans lequel le pourcentage atomique d'azote dans la couche de surface B est supérieur à celui dans la couche de surface A de plus de 1,0 %, le pourcentage atomique d'oxygène dans la couche de surface B est supérieur à celui dans la couche de surface A de plus de 2,5 %, et le pourcentage atomique de soufre dans la couche de surface B est supérieur à celui dans la couche de surface A de plus de 0,3 %.

3. Le pneumatique (1) selon la revendication 2, dans lequel le pourcentage atomique d'azote dans la couche de surface B est supérieur à 1,5 %, le pourcentage atomique d'oxygène dans la couche de surface B est supérieur à 3,0 %, et le pourcentage atomique de soufre dans la couche de surface B est supérieur à 0,4 %.

4. Le pneumatique (1) selon l'une quelconque des revendications 1 à 3, dans lequel les incisions (12, 13, 14, 15) incluent une ou plusieurs des incisions (12, 13, 14, 15) s'étendant respectivement pour former une(des) ouverture(s) jusqu'à la(aux) sous-rainure(s) (5) au niveau de la(des) face(s) frontale(s) (8, 9) ou jusqu'à la(aux) rainure(s) principale(s) (4) au niveau de la(des) face(s) latérale(s) (10, 11), et dans lequel chacune de la(des) ouverture(s) présente(nt) une largeur d'ouverture (w).

5. Pneumatique (1) selon la revendication 4, dans lequel les incisions (12, 13, 14, 15) incluent une ou plusieurs des incisions (12) s'étendant axialement pour être ouvertes au niveau des deux faces latérales (10, 11).

6. Le pneumatique (1) selon la revendication 4, dans lequel les incisions (12, 13, 14, 15) incluent une pluralité des incisions (13) s'étendant circonférentiellement pour être ouvertes jusqu'à l'une des sous-rainures (5) au niveau d'une ou des deux faces frontales (8, 9), et dans lequel un rapport de la somme des largeurs d'ouverture (w) des incisions (13) sur chacune des faces frontales (8, 9) sur la largeur de bloc (BW) est entre 10 % et 60 %.

7. Le pneumatique (1) selon la revendication 6, dans lequel les incisions (12, 13, 14, 15) incluent une ou plusieurs d'incisions supplémentaires (12) s'étendant axialement pour être ouvertes au niveau des deux faces latérales (10, 11).

8. Le pneumatique (1) selon la revendication 7, dans lequel les incisions (12, 13, 14, 15) incluent une pluralité des incisions (14) s'étendant circonférentiellement pour être ouvertes jusqu'à l'une des incisions supplémentaires (12) au niveau de l'une de faces de paroi des incisions supplémentaires (12).

9. Le pneumatique (1) selon la revendication 8, dans lequel chacune des incisions (12, 13, 14, 15) inclut une pluralité des incisions (15) au niveau d'une ou des deux faces latérales (10, 11), les incisions (15) s'étendant axialement pour être ouvertes au niveau de l'une des faces latérales (10, 11).

10. Le pneumatique (1) selon l'une quelconque des revendications 4 à 9, dans lequel la largeur d'ouverture (w) est entre 0,1 et 3,0 mm.

11. Le pneumatique (1) selon l'une quelconque des revendications 4 à 10, dans lequel un produit de la largeur d'ouverture (w) et de l'angle de contact d'eau sur la face de paroi de chacune des incisions (12, 13, 14, 15) est entre 3 et 30 mm.

12. Le pneumatique (1) selon l'une quelconque des revendications 1 à 11, dans lequel la couche de surface B est nitrurée et oxydée.

13. Le pneumatique (1) selon la revendication 12, dans lequel la couche de surface A est constituée d'une composition de caoutchouc, et dans lequel la couche de surface B est constituée de la composition de caoutchouc avant nitruration et oxydation de la couche de surface B.

14. Le pneumatique (1) selon la revendication 12 ou la revendication 13, dans lequel la composition de caoutchouc comprend au moins un élastomère diène, une charge de renforcement et un système de vulcanisation.

15. Le pneumatique (1) selon la revendication 14, dans lequel la composition de caoutchouc comprend moins de 10 pcc d'agent protecteur.
